# EUROPEAN PATENT APPLICATION

(11) **EP 4 553 984 A1**
(43) Date of publication of application: **14.05.2025**
(21) Application number: 24764146.7
(22) Date of filing: 26.02.2024
(51) Int. Cl.: H01M 50/446, H01M 50/431, H01M 50/411, H01M 10/0525, H01M 10/0569

(54) **SEPARATOR FOR ELECTROCHEMICAL DEVICE, METHOD FOR MANUFACTURING SAME, AND ELECTROCHEMICAL DEVICE COMPRISING SAME**

(30) Priority: 27.02.2023 KR 20230026219
(71) Applicant: LG Energy Solution, Ltd., Seoul 07335 (KR)
(72) Inventor: KA, Kyung Ryun, Daejeon 34122 (KR); SUNG, Dong Wook, Daejeon 34122 (KR); SUNG, In Hyouk, Daejeon 34122 (KR); KIM, Ji Hyeon, Daejeon 34122 (KR); KIM, Ji Yeon, Daejeon 34122 (KR)
(74) Representative: Hoffmann Eitle
(86) International application number: PCT/KR2024/002420
(87) International publication number: WO 2024/181746

(57) **Abstract**

The present disclosure provides a separator for an electrochemical device, including a porous polymer substrate and a porous coating layer formed on at least one surface of the porous polymer substrate, wherein the porous coating layer contains a polymer binder, inorganic particles, and an organic filler, the polymer binder is contained in an amount of 1 to 10 parts by weight based on the total weight of the porous coating layer, and the inorganic particles have a packing density of 2 g/cm³ or more to 2.5 g/cm³ or less.

## Description

### TECHNICAL FIELD

This application is based on, and claims priority to, Korean Patent Application No. 10-2023-0026219, filed with the Korean Intellectual Property Office on February 27, 2023, the contents of which are incorporated in their entirety into this application by reference herein.

The present disclosure relates to a separator for an electrochemical device, a method for manufacturing the same, and an electrochemical device including the same.

### BACKGROUND ART

Electrochemical devices convert chemical energy into electrical energy using an electrochemical reaction. Recently, lithium secondary batteries, which have high energy density and voltage, long cycle life, and can be used in various fields, have been widely used.

A lithium secondary battery may include an electrode assembly made of a cathode, an anode, and a separator disposed between the cathode and the anode, and the electrode assembly may be manufactured by being stored in a case together with an electrolyte solution. A separator may include a porous coating layer containing a polymer binder and inorganic particles on at least one surface of the porous substrate. The inorganic particles may be connected to other inorganic particles by a polymer binder to form an interstitial volume, and lithium ions may move by passing through the interstitial volume. In addition to fixing the inorganic particles, the polymer binder may impart adhesive force to the porous coating layer, and the porous coating layer may adhere to the porous substrate and the electrode, respectively.

The porous coating layer containing a polymer binder and inorganic particles may prevent thermal shrinkage of a porous polymer substrate, and the separator including the porous coating layer shows excellent dimensional stability in a dry state without an electrolyte solution. However, in a wet state in which the separator is impregnated with an electrolyte solution, the polymer binder may swell by the electrolyte solution, or the adhesive force of the polymer binder may deteriorate as the separator is exposed to a temperature of about 130°C or higher due to the operation of a lithium secondary battery including the separator. In this high-temperature wet state, the separator shrinks significantly as the adhesive force of the porous coating layer decreases. Particularly, since cylindrical batteries in which the electrode assembly is wound, and inserted into the case in a state that tension was applied to the electrode assembly require relatively less adhesive force between the electrode and the separator compared to pouch-type batteries, there was a problem in that the dimensional stability in the wet state was further lowered lower due to low content of a polymer binder

Therefore, research is being conducted on separators for ensuring dimensional stability under high temperature and wet state conditions while maintaining a relatively low content of a polymer binder in a porous coating layer.

### DETAILED DESCRIPTION OF INVENTION

### TECHNICAL PROBLEMS

An object of the present disclosure is to provide a separator for an electrochemical device, which has excellent heat resistance, and improved shrinkage rate in a state that it is impregnated with an electrolyte solution by adjusting the packing density of the inorganic particles contained in the porous coating layer and further including an organic filler.

### TECHNICAL SOLUTION

One aspect of the present disclosure provides a separator for an electrochemical device, including a porous polymer substrate and a porous coating layer formed on at least one surface of the porous polymer substrate, wherein the porous coating layer contains a polymer binder, inorganic particles, and an organic filler, the polymer binder is contained in an amount of 1 to 10 parts by weight based on the total weight of the porous coating layer, and the inorganic particles have a packing density of 2 g/cm³ or more to 2.5 g/cm³ or less.

The organic filler may be one or more selected from the group consisting of polyethylene, polyacetal, polysulfone (PSF), polyethersulfone (PES), polyetherimide (PEI), polyphenylene sulfide (PPS), polyether ether ketone (PEEK), polycarbonate, polyamideimide (PAI), polyimide (PI), polyamide, polyphenylene oxide, polybutylene terephthalate, and polyethylene terephthalate.

The polymer binder and the organic filler may be contained at a weight ratio of 5:1 to 1:5.

The polymer binder may be one or more selected from the group consisting of polyacrylic acid, polyacrylamide, methyl acrylate, ethyl acrylate, isopropyl acrylate, n-butyl acrylate, isobutyl acrylate, ethyl hexyl acrylate, methyl methacrylate, styrene-butadiene rubber, nitrile-butadiene rubber, acrylonitrile-butadiene rubber, acrylonitrile-butadiene-styrene rubber, and copolymers including one or more thereof.

The polymer binder may have a weight average molecular weight of 100,000 to 500,000.

The inorganic particles may have a packing density of 2.1 g/cm³ or more to 2.3 g/cm³ or less.

The other aspect of the present disclosure provides an electrochemical device as an electrochemical device including a cathode, an anode, and a separator disposed between the cathode and the anode, wherein the separator is another separator for an electrochemical device in one aspect.

The electrochemical device may be a lithium secondary battery.

The electrochemical device may further include an electrolyte solution containing EC/EMC at a weight ratio of 3/7.

### EFFECT OF INVENTION

The separator for an electrochemical device according to the present disclosure can provide improved dimensional stability in a wet state in which it is impregnated with an electrolyte solution. Specifically, the separator can exhibit a heat shrinkage rate in the TD direction of 10% or less under high temperature conditions of 130°C or higher, thereby preventing electrode exposure due to thermal shrinkage of the separator.

### BEST MODE FOR CARRYING OUT THE INVENTION

Hereinafter, each configuration of the present disclosure will be described in more detail so that those skilled in the art to which the present disclosure pertains can easily implement it. However, this is only an example, and the scope of rights of the present disclosure is not limited by the following contents.

The term "including" used in this specification is used to list materials, compositions, devices, and methods useful in the present disclosure and is not limited to the listed examples.

The terms "about" and "substantially" used in this specification are used to mean a range of the values or degrees or approximations thereof by taking into account unique manufacturing and material tolerances, and are used to prevent infringers from unfairly using the disclosed contents in which precise or absolute values provided to aid understanding of the present disclosure are mentioned.

The term "electrochemical device" used in this specification may mean a primary battery, secondary battery, super capacitor, or the like.

The term "wet state" used in this specification may mean a state in which the separator is impregnated with at least a portion of the electrolyte solution.

One embodiment of the present disclosure provides a separator for an electrochemical device, which includes a porous polymer substrate and a porous coating layer formed on at least one surface of the porous polymer substrate, wherein the porous coating layer contains a polymer binder, inorganic particles, and an organic filler, the polymer binder is contained in an amount of 1 to 10 parts by weight based on the total weight of the porous coating layer, and the inorganic particles have a packing density of 2 g/cm³ or more to 2.5 g/cm³ or less.

The porous polymer substrate is a porous membrane in which a plurality of pores are formed, and may electrically insulate the cathode and the anode to prevent short circuit. For example, when the electrochemical device is a lithium secondary battery, the porous polymer substrate may be an ion conductive barrier that allows lithium ions to pass through while blocking electrical contact between the cathode and the anode. At least some of the pores may form a three-dimensional network communicating with the surface and interior of the porous polymer substrate, and fluid may pass through the porous polymer substrate through the pores.

The porous polymer substrate may use materials that are physically and chemically stable to an electrolyte solution, which is an organic solvent. For example, the porous polymer substrate may include resins such as polyolefin-based resin such as polyethylene, polypropylene, and polybutylene, polyvinyl chloride, polyethylene terephthalate, polycycloolefin, polyethersulfone, polyamide, polyimide, polyamideimide, nylon, polytetrafluoroethylene, and copolymers or mixtures thereof, but is not limited thereto. Preferably, polyolefin-based resins may be used. The polyolefin-based resins can be processed into relatively thin thicknesses and are easy to apply a slurry for coating, making them suitable for manufacturing of electrochemical devices with higher energy density.

The porous polymer substrate may have a single-layer or multi-layer structure. The porous polymer substrate may provide a shutdown function in case of high temperature runaway of the battery by including two or more polymer resin layers having different melting points (Tm). For example, the porous polymer substrate may include a polypropylene layer with a relatively high melting point and a polyethylene layer with a relatively low melting point. Preferably, the porous polymer substrate may be a three-layer structure in which polypropylene, polyethylene, and polypropylene are laminated in that order. As the temperature of the battery increases to a predetermined temperature or higher, the polyethylene layer may prevent thermal runaway of the battery by shutting down the pores while being melted.

The porous polymer substrate may have a thickness of 1 µm or more to 100 µm or less. Specifically, the porous polymer substrate may have a thickness of 10 µm or more to 90 µm or less, 20 µm or more to 80 µm or less, 30 µm or more to 70 µm or less, or 40 µm or more to 60 µm or less. Preferably, the polymer substrate may have a thickness of 1 µm or more to 30 µm or less. More preferably, the polymer substrate may have a thickness of 5 µm or more to 15 µm or less, or 8 µm or more to 13 µm or less. The amount of an active material included in the electrochemical device may be increased by minimizing the volume of the electrochemical device while electrically insulating the cathode and the anode by adjusting the thickness of the porous polymer substrate within the above-described range.

The porous polymer substrate may contain pores with an average diameter of 0.01 µm or more to 1 µm or less. Specifically, the pores contained in the porous polymer substrate may have a size of 0.01 µm or more to 0.09 µm or less, 0.02 µm or more to 0.08 µm or less, 0.03 µm or more to 0.07 µm or less, or 0.04 µm or more to 0.06 µm or less. Preferably, the pores may have a size of 0.02 µm or more to 0.06 µm or less. The air permeability and ionic conductivity of the entire separator to be manufactured may be adjusted by adjusting the pore size of the porous polymer substrate within the above-described range.

The porous polymer substrate may have an air permeability of 10 s/100 cc or more to 100 s/100 cc or less. Specifically, the porous polymer substrate may have an air permeability of 10 s/100 cc or more to 90 s/100 cc or less, 20 s/100 cc or more to 80 s/100 cc or less, 30 s/100 cc or more to 70 s/100 cc or less, or 40 s/100 cc or more to 60 s/100 cc or less. Preferably, the porous polymer substrate may have an air permeability of 50 s/100 cc or more to 70 s/100 cc or less. When the air permeability of the porous polymer substrate is within the above-described range, the air permeability of the separator to be manufactured may be provided in a range suitable for securing the output and cycle characteristics of the electrochemical device.

The air permeability (s/100 cc) means the time (seconds) it takes for 100 cc of air to pass through a porous polymer substrate or separator of a predetermined area under a certain pressure. The air permeability may be measured using an air permeability tester (Gurley densometer) according to ASTM D 726-58, ASTM D726-94, or JIS-P8117. For example, Gurley's 4110N equipment may be used to measure the time it takes for 100 cc of air to pass through a 1 square inch (or 6.54 cm²) sample under a pressure of 0.304 kPa of air or a pressure of 1.215 kN/m² of water. For example, the Asahi seico's EG01-55-1MR equipment may be used to measure the time it takes for 100 cc of air to pass through a 1 square inch sample under a constant pressure of 4.8 inches of water at room temperature.

The porous polymer substrate may have a porosity of 10 vol% or more to 60 vol% or less. Specifically, the porous polymer substrate may have a porosity of 15 vol% or more to 55 vol% or less, 20 vol% or more to 50 vol% or less, 25 vol% or more to 45 vol% or less, or 30 vol% or more to 40 vol% or less. Preferably, the porous polymer substrate may have a porosity of 30 vol% or more to 50 vol% or less. When the porosity of the porous polymer substrate is within the above-described range, the ionic conductivity of the separator to be manufactured may be provided in a range suitable for securing the output and cycle characteristics of the electrochemical device.

The porosity means the volume ratio of pores to the total volume of the porous polymer substrate. The porosity may be measured by a method publicly known in this technical field. For example, it may be measured by Brunauer Emmett Teller (BET) measurement method using adsorption of nitrogen gas, capillary flow porometer, water or mercury infiltration method.

The porous coating layer is formed on at least any one surface of the porous polymer substrate and contains a polymer binder, inorganic particles, and an organic filler. The porous coating layer may be formed by coating a coating slurry containing a polymer binder, inorganic particles, an organic filler, and a dispersion medium on at least one surface of the porous polymer substrate. The porous coating layer adheres to the porous polymer substrate while allowing lithium ions to pass therethrough by including an interstitial volume in which inorganic particles are connected by a polymer binder, thereby preventing thermal shrinkage of the porous polymer substrate.

The coating slurry may include a dispersion medium and thus dissolve or disperse at least a portion of the polymer binder and organic filler, and disperse inorganic particles. The coating slurry may use one in which the polymer binder, inorganic particles, and organic filler are uniformly dispersed by adjusting the type and content of the dispersion medium. For example, the dispersion medium may be one selected from the group consisting of water, ethanol, acetone, isopropyl alcohol (IPA), dimethylacetamide (DMAc), dimethylformamide (DMF), N-methyl-2-pyrrolidone (NMP), acetonitrile, and combinations thereof. Preferably, the dispersion medium may be NMP. A porous coating layer in which the polymer binder and inorganic particles are uniformly dispersed may be formed by using the above-described type of dispersion medium.

The coating slurry may improve dispersibility and flame retardancy and improve the uniformity of a porous coating layer to be formed by further containing additives such as a dispersant, a surfactant, an antifoaming agent, and a flame retardant. For example, the dispersant may include one or more selected from the group consisting of polyacrylic acid, oil-soluble polyamine, oil-soluble amine compound, fatty acids, fatty alcohols, sorbitan fatty acid ester, tannic acid, and pyrogallic acid. The stability of the coating slurry may be improved and the uniformity of the porous coating layer to be formed from the coating slurry may be secured by using the above-described type of dispersant.

The additives may be contained in an amount of 0% by weight or more to 5% by weight or less based on the total weight of the coating slurry. Specifically, the additives may be contained in an amount of 0.01% by weight or more to 4% by weight or less, 0.1% by weight or more to 3% by weight or less, or 1% by weight or more to 2% by weight or less. Preferably, the additives may have a content of 1% by weight or more to 5% by weight or less. Uniform dispersion and stability of the inorganic particles contained in the coating slurry may be achieved by adjusting the content of the additives within the above-described range.

The dispersion medium contained in the coating slurry may be removed by drying or heating after the formation of the porous coating layer. For example, the porous coating layer may contain 5 ppm or less of the dispersion medium. Preferably, the porous coating layer may be composed of a polymer binder and inorganic particles. In the process of removing the dispersion medium, a plurality of pores may be formed on the surface and inside the porous coating layer. The pores may include interstitial volumes formed between inorganic particles, and may have a structure through which fluid can pass by forming a three-dimensional network.

The porous coating layer may have a thickness of 1 µm or more to 15 µm or less. Specifically, the porous coating layer may have a thickness of 2 µm or more to 14 µm or less, 3 µm or more to 13 µm or less, 4 µm or more to 12 µm or less, 5 µm or more to 11 µ m or less, 6 µm or more to 10 µm or less, or 7 µm or more to 9 µm or less. Preferably, the porous coating layer may have a thickness of 1 µm or more to 5 µm or less, more preferably 1 µm or more to 3 µm or less. Shrinkage of the porous polymer substrate may be minimized and stable adhesion to the porous polymer substrate may be implemented by adjusting the thickness of the porous coating layer within the above-described range.

The polymer binder may bind the inorganic particles contained in the porous coating layer and impart adhesive force to the porous coating layer. The polymer binder may have a spherical or oval shape, but may mean including other shapes excluding amorphous shapes.

The polymer binder may include an acrylic binder. For example, the polymer binder may be one or more selected from the group consisting of polyacrylic acid, polyacrylamide, methyl acrylate, ethyl acrylate, isopropyl acrylate, n-butyl acrylate, isobutyl acrylate, ethyl hexyl acrylate, methyl methacrylate, styrene-butadiene rubber, nitrile-butadiene rubber, acrylonitrile-butadiene rubber, acrylonitrile-butadiene-styrene rubber, and copolymers including one or more thereof. The acrylic binder binds inorganic particles to form a network structure and may exhibit adhesive force to a porous polymer substrate and an electrode. Preferably, the polymer binder may include a copolymer of polyacrylic acid and polyacrylamide. The polymer binder may be swollen by the electrolyte solution, reducing the adhesive strength. However, the copolymer of polyacrylic acid and polyacrylamide has low swelling caused by the electrolyte solution and is heat resistant, so the separator containing the copolymer may have an improved heat shrinkage rate in a wet state.

The polymer binder may have a weight average molecular weight of 100,000 to 500,000. Specifically, the polymer binder may have a weight average molecular weight of 150,000 or more to 450,000 or less, 200,000 or more to 400,000 or less, or 250,000 or more to 350,000 or less. Preferably, the polymer binder may have a weight average molecular weight of 100,000 to 300,000. Heat shrinkage rate of the separator containing it may be improved by reducing swelling of the polymer binder due to the electrolyte solution by adjusting the weight average molecular weight of the polymer binder within the above-described range.

The weight average molecular weight may be measured by gel permeation chromatography (GPC) (PL GPC220, Agilent Technologies). For example, the weight average molecular weight may be measured by using Trichlorobenzene (TCB) as a solvent in a PL Olexis (Polymer Laboratories) column (column temperature is 160°C), and using an Agilent High Temperature RI detector under conditions such as a sample concentration of 1.0 mg/mL, a flow rate of 1.0 mL/min, and an injection amount of 200 µl (standard: Polystyrene).

The porous coating layer may contain 1 to 10 parts by weight of the polymer binder based on the total weight of the porous coating layer. Specifically, the porous coating layer may contain the polymer binder in an amount of 1 part by weight or more to 9 parts by weight or less, 2 parts by weight or more to 8 parts by weight or less, 3 parts by weight or more to 7 parts by weight or less, or 4 parts by weight or more to 6 parts by weight or less. Preferably, the porous coating layer may contain 1 to 5 parts by weight of the polymer binder. If the content of the polymer binder is less than 1 part by weight, an interstitial volume cannot be formed through bonding between inorganic particles, making it difficult to transfer lithium ions, thereby increasing the electrical resistance of the separator. If the content of the polymer binder exceeds 10 parts by weight, the amount of the polymer binder swollen by the electrolyte solution increases and the porous coating layer may be peeled off from the porous polymer substrate.

The organic filler is a polymer resin with a melting point (Tm) or glass transition temperature (Tg) of 100°C or higher, and may prevent the separator from shrinking when it is in a high-temperature wet state by imparting heat resistance properties to the porous coating layer. For example, the organic filler may be one or more selected from the group consisting of polyethylene, polyacetal, polysulfone, polyethersulfone, polyetherimide, polyphenylene sulfide, polyether ether ketone, polycarbonate, polyamideimide, polyimide, polyamide, polyphenylene oxide, polybutylene terephthalate, and polyethylene terephthalate. Preferably, the organic filler may be one or more selected from the group consisting of polyethylene, polysulfone, polyethersulfone, polyimide, and polyamideimide.

The polymer binder and the organic filler may be contained in the porous coating layer at a weight ratio of 5:1 to 1:5. Specifically, the weight ratio of the polymer binder and the organic filler may be 4:1 to 1:4, 3:1 to 1:3, 2:1 to 1:2, or 1:1. Preferably, the weight ratio of the polymer binder and the organic filler may be 2:1 to 1:2. When the contents of the polymer binder and organic filler are adjusted to the above-described range, the adhesive force and heat resistance of the porous coating layer are simultaneously secured so that a separator with reduced heat shrinkage may be obtained even in a high-temperature wet state.

The porous coating layer may contain the polymer binder and the inorganic particles at a weight ratio of 5:95 to 80:20. Specifically, the weight ratio of the polymer binder and the inorganic particles in the porous coating layer may be 10:90 to 80:20, 20:80 to 80:20, 30:70 to 70:30, 40:60 to 60:40, or 50:50. Preferably, the weight ratio of the polymer binder and the inorganic particles may be 60:40 to 80:20. The adhesive force of the separator and dimensional stability in a high-temperature wet state may be simultaneously secured by adjusting the composition of the porous coating layer within the above-described range.

The inorganic particles may use those that are electrochemically stable. The inorganic particles are not particularly limited as long as oxidation and/or reduction reactions do not occur in the operating voltage range of the electrochemical device (for example, 0 to 5 V based on Li/Li⁺). In particular, when inorganic particles with a high dielectric constant are used as the inorganic particles, the ionic conductivity of the electrolyte solution may be improved by contributing to an increase in the degree of dissociation of electrolyte salts, such as lithium salts, in the liquid electrolyte. For the above-described reasons, the inorganic particles preferably include high dielectric constant inorganic particles having a dielectric constant of 5 or more, preferably 10 or more. Non-limiting examples of inorganic particles with a dielectric constant of 5 or more include BaTiO₃, Pb(Zr,Ti)O₃(PZT), b₁₋ₓLaₓZr_{1-y}Ti_{y}O₃(PLZT, 0<x<1, 0<y<1), Pb(Mg_{1/3}Nb_{2/3})O₃-PbTiO₃(PMN-PT), hafnia (HfO₂), SrTiO₃, SnO₂, CeO₂, MgO, NiO, CaO, ZnO, ZrO₂, SiO₂, Y₂O₃, Al₂O₃, Al(OH)₃, SiC, AlOOH, TiO₂, or mixtures thereof.

In addition, inorganic particles having the ability to transfer lithium ions, that is, inorganic particles containing lithium element but having the function of moving lithium ions without storing lithium, may be used as the inorganic particles. Non-limiting examples of inorganic particles with lithium ion transfer ability include (LiAlTiP)ₓO_{y} series glass (0 <x < 4, 0 < y < 13 ) such as lithium phosphate (Li₃PO₄), lithium titanium phosphate (LiₓTi_{y}(PO₄)₃, 0 < x <2, 0 < y <3), lithium aluminum titanium phosphate (LiₓAl_{y}Ti_{z}(PO₄)₃, 0 < x < 2, 0 < y <1, 0 < z < 3), 14Li₂O-9Al₂O₃-38TiO₂-39P₂O₅, etc., lithium germanium thiophosphate (LiₓGe_{y}P_{z}S_{w}, 0 < x < 4, 0< y < 1, 0< z < 1, 0 < w < 5) such as lithium lanthanum titanate (LiₓLa_{y}TiO₃, 0 < x<2, 0 < y < 3), Li_{3.25}Ge_{0.25}P_{0.75}S₄, etc., lithium nitride (LiₓN_{y}, 0 < x <4, 0 < y <2) such as Li₃N, etc., SiS₂ series glass (LiₓSi_{y}S_{z}, 0 < x < 3, 0 <y < 2, 0 < z < 4) such as Li₃PO₄-Li₂S-SiS₂, etc., P₂S₅ series glass (LiₓP_{y}S_{z}, 0 < x < 3, 0< y < 3, 0 < z < 7) such as LiI-Li₂S-P₂S₅, etc., or mixtures thereof.

In addition, the inorganic particles are inorganic particles having flame retardancy, and inorganic particles that can impart flame retardant properties to the separator or prevent the temperature inside the electrochemical device from rapidly rising may be used as the inorganic particles. Non-limiting examples of inorganic particles having flame retardancy include Sb₂O₃, Sb₂O₄, Sb₂O₅, SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃ , SiO₂, Al₂O₃, AlOOH, Al(OH)₃, SiC, TiO₂, H₃BO₃, HBO₂, and mixtures thereof.

The inorganic particles may have an average particle diameter (D50) of 50 nm or more to 5,000 nm or less. Specifically, the inorganic particles may have an average particle diameter (D50) of 100 nm or more to 4,500 nm or less, 200 nm or more to 4,000 nm or less, 300 nm or more to 3,000 nm or less, 400 nm or more to 2,000 nm or less, or 500 nm or more to 1,000 nm or less. If the average particle diameter of the inorganic particles is less than 50 nm, as the specific surface area increases, an additional polymer binder for bonding between the inorganic particles is required, which is disadvantageous in terms of electrical resistance. If the average particle diameter of the inorganic particles exceeds 5000 nm, the uniformity of the surface of the coating layer may decrease and damage to the porous polymer substrate or electrode may be caused during lamination.

The inorganic particles may have an aspect ratio of 1 or more to 2 or less. Specifically, the inorganic particles may have an aspect ratio of 1.1 or more to 1.9 or less, 1.2 or more to 1.8 or less, 1.3 or more to 1.7 or less, or 1.4 or more to 1.6 or less. Preferably, the inorganic particles may have an aspect ratio of 1.5 or more to 1.8 or less. The aspect ratio of the inorganic particles is adjusted within the above-described range, and thus the movement of the polymer binder through the pores between the inorganic particles is facilitated, and a porous coating layer in which the filmed region is uniformly distributed through the formation of a filmed region after movement of the polymer binder may be formed.

The inorganic particles may have a BET specific surface area of 5 m²/g or more to 25 m²/g or less. Specifically, the inorganic particles may have a BET specific surface area of 6 m²/g or more to 24 m²/g or less, 7 m²/g or more to 23 m²/g or less, 8 m²/g or more to 22 m²/g or less, 9 m²/g or more to 21 m²/g or less, 10 m²/g or more to 20 m²/g or less, 11 m²/g or more to 19 m²/g or less, 12 m²/g or more to 18 m²/g or less, 13 m²/g or more to 17 m²/g or less, or 14 m²/g or more to 26 m²/g or less. The movement of the polymer binder through the pores between the inorganic particles may be adjusted by adjusting the BET specific surface area of the inorganic particles within the above-described range.

The inorganic particles may have a packing density of 2 g/cm³ or more to 2.5 g/cm³ or less. The packing density is based on the porous coating layer formed after coating and drying the coating slurry. Specifically, the inorganic particles may have a packing density of 2.1 g/cm³ or more to 2.4 g/cm³ or less, or 2.2 g/cm³ or more to 2.3 g/cm³ or less. Preferably, the inorganic particles may have a packing density of 2.1 g/cm³ or more to 2.3 g/cm³ or less. If the packing density of the inorganic particles is less than 2 g/cm³, the electrode is exposed as the separator shrinks in a high-temperature wet state, and if the packing density of the inorganic particles exceeds 2.5 g/cm³, the air permeability and resistance of the separator increase so that stable cycle characteristics cannot be secured.

The separator for an electrochemical device may have an air permeability of 20 s/100 cc or more to 90 s/100 cc or less. Specifically, the separator may have an air permeability of 25 s/100 cc or more to 85 s/100 cc or less, 30 s/100 cc or more to 80 s/100 cc or less, 35 s/100 cc or more to 75 s/100cc or less, 40 s/100 cc or more to 70 s/100 cc or less, 45 s/100 cc or more to 65 s/100 cc or less, or 50 s/100 cc or more to 55 s/100 cc or less. Preferably, the separator may have an air permeability of 80 s/100 cc or more to 90 s/100 cc or less. When the air permeability of the separator is within the above-described range, the output, stability, and cycle characteristics of the electrochemical device may be secured.

When a cell is manufactured using the separator for an electrochemical device, the cell may have an electrical resistance of 0.5 Ohm or more to 1.5 Ohm or less. Specifically, the cell may have an electrical resistance of 0.6 Ohm or more to 1.4 Ohm or less, 0.7 Ohm or more to 1.3 Ohm or less, 0.8 Ohm or more to 1.2 Ohm or less, or 0.9 Ohm or more to 1.1 Ohm or less. Preferably, the cell may have an electrical resistance of 0.6 Ohm or more to 0.8 Ohm or less.

Another embodiment of the present disclosure provides a method for manufacturing a separator for an electrochemical device, including steps of forming a coating layer by coating at least one surface of a porous polymer substrate with a coating slurry containing a polymer binder, inorganic particles, an organic filler, and a dispersion medium, and drying the coating layer to remove the dispersion medium. Content that overlaps with the content described in the above separator for an electrochemical device is replaced with the explanation of the previous embodiment.

The step of forming the coating layer is coating at least one surface of a porous polymer substrate with a coating slurry containing a polymer binder, inorganic particles, an organic filler, and a dispersion medium. For example, the coating may be formed by methods such as a bar coater, a wire bar coater, a roll coater, a spray coater, a spin coater, an inkjet coater, a screen coater, a reverse coater, a gravure coater, a knife coater, a slot die coater, a hot melt coater, a comma coater, and a direct metering coater, but is not limited thereto. Preferably, the step of forming the coating layer may be simultaneously coating both surfaces of the porous polymer substrate with the coating slurry using a bar coater or a slot die coater.

The step of forming the coating layer may further include a step of corona discharge-treating at least one surface of the porous polymer substrate. After the corona discharge treatment step, the coating slurry may be coated on the porous polymer substrate. The step of corona discharge-treating at least one surface of the porous polymer substrate may prevent a decrease in the bonding force between the surface of the porous polymer substrate and the surface of the coating layer at high temperatures, and prevent the bonding force between the surface of the polymer substrate and the surface of the coating layer from being lowered by the electrolyte.

The corona discharge treatment may be treating at least one surface of the porous polymer substrate with a voltage of 0.1 kV or more to 10 kV or less in air. Specifically, the corona discharge treatment may be treating it with a voltage of 0.2 kV or more to 9 kV or less, 0.3 kV or more to 8 kV or less, 0.4 kV or more to 7 kV or less, 0.5 kV or more to 6 kV or less, 0.6 kV or more to 5 kV or less, 0.7 kV or more to 4 kV or less, 0.8 kV or more to 3 kV or less, 0.9 kV or more to 2 kV or less, or 1.0 kV or more to 2 kV or less in air. Preferably, the corona discharge treatment may be treating it with a voltage of 1.8 kV in air. The applied voltage of the corona discharge treatment is adjusted within the above-described range, and thus an appropriate number of functional groups may be formed on the surface of the polymer substrate, and damage to the surface of the polymer substrate may be prevented.

The step of removing the dispersion medium may be drying or heating the coating layer to evaporate the dispersion medium contained in the coating layer. The step of removing the dispersion medium may be performed at a temperature capable of evaporating only the dispersion medium contained in the coating layer while not deforming the polymer binder contained in the coating layer. For example, the step of removing the dispersion medium may be to heat the coating layer to a predetermined temperature, but ensure that the temperature of the surface of the coating layer does not exceed 60°C. When heating the coating layer under the above conditions, thermal energy is first used to heat the dispersion medium to change the phase, and may not be used to modify the polymer binder.

Another embodiment of the present disclosure provides an electrochemical device including a cathode, an anode, and a separator interposed between the cathode and the anode, wherein the separator is the separator for an electrochemical device of the above-described embodiment. The electrochemical device may be manufactured by inserting an electrode assembly including a cathode, an anode, and a separator interposed between the cathode and the anode into a case or pouch and sealing it. The electrode assembly may be impregnated with the electrolyte solution by injecting the electrolyte solution before sealing the case or pouch. The shape of the case or pouch is not limited. For example, the electrochemical device may be a cylindrical, prismatic, coin-shaped, or pouch-shaped lithium secondary battery.

The cathode and the anode may be coated by applying and drying an electrode active material on at least one surface of each current collector. A material that has conductivity while not causing chemical changes in the electrochemical device may be used as the current collector. For example, the current collector for the cathode include aluminum, nickel, titanium, fired carbon, and stainless steel; and a surface of aluminum or stainless steel, which is treated with carbon, nickel, titanium, silver, etc., but is not limited thereto. For example, the current collector for the anode include copper, nickel, titanium, fired carbon, and stainless steel; and a surface of copper or stainless steel, which is treated with carbon, nickel, titanium, silver, etc., but is not limited thereto. The current collector may be in various forms such as a thin metal plate, film, foil, net, porous body, or foam.

The cathode includes a cathode current collector and a cathode active material layer containing a cathode active material, a conductive material, and a binder resin on at least one surface of the current collector. The cathode active material may include one or mixtures of two or more of: layered compounds such as lithium manganese composite oxides (LiMn₂O₄, LiMnO₂, etc.), lithium cobalt oxide (LiCoO₂), or lithium nickel oxide (LiNiO₂), and compounds substituted with one or more transition metals; lithium manganese oxides with the formula Li₁₊ₓMn₂₋ₓO₄ (where x is 0 to 0.33) such as LiMnO₃, LiMn₂O₃, LiMnO₂, etc.; lithium copper oxide (Li₂CuO₂); vanadium oxides such as LiV₃O₈, LiV₃O₄, V₂O₅, Cu₂V₂O₇, etc.; Ni site-type lithium nickel oxides represented by the formula LiNi₁₋ₓMₓO₂ (where M = Co, Mn, Al, Cu, Fe, Mg, B or Ga, and x = 0.01 to 0.3); lithium manganese complex oxides represented by the chemical formula LiMn₁₋ₓMₓO₂ (where M = Co, Ni, Fe, Cr, Zn, or Ta, and x = 0.01 to 0.1) or Li₂Mn₃MO₈ (where M = Fe, Co, Ni, Cu, or Zn); LiMn₂O₄ in which a portion of Li in the formula is substituted with alkaline earth metal ions; disulfide compounds; and Fe₂(MoO₄)₃.

The anode includes an anode current collector and an anode active material layer containing an anode active material, a conductive material, and a binder resin on at least one surface of the current collector. The anode may include as an anode active material one or mixtures of two or more selected from: carbon such as lithium metal oxide, non-graphitizable carbon, and graphitic carbon; silicon-based materials such as LixFe₂O₃ (0≤x≤1), LiₓWO₂ (0≤x≤1), Si, SiOₓ (0<x<2), SiC, and Si alloy; metal complex oxides such as SnₓMe₁₋ₓMe'_{y}O_{z} (Me: Mn, Fe, Pb, and Ge; and Me': Al, B, P, Si, elements of groups 1, 2, and 3 of the periodic table, and halogen; 0<x≤1; 1≤y ≤3; 1≤z≤8), etc.; lithium metal; lithium alloy; tin-based alloy; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni based materials; and titanium oxides.

The conductive material may be any one selected from the group consisting of graphite, carbon black, carbon fiber or metal fiber, metal powder, conductive whisker, conductive metal oxide, carbon nanotubes, activated carbon, and polyphenylene derivatives, or mixtures of two or more conductive materials thereof. The carbon nanotubes have a graphite sheet in the shape of a cylinder with a nano-sized diameter and a sp² bond structure, and exhibit conductor or semiconductor characteristics depending on the angle and structure at which the graphite sheet is rolled. Carbon nanotubes may be classified into single-walled carbon nanotubes (SWCNTs), double-walled carbon nanotubes (DWCNTs), and multi-walled carbon nanotubes (MWCNTs) depending on the number of bonds forming the wall, and these carbon nanotubes may be appropriately selected depending on the use of the dispersion. More specifically, the carbon nanotubes may be one selected from the group consisting of natural graphite, artificial graphite, super-p, acetylene black, Ketjen black, channel black, furnace black, lamp black, summer black, Denka black, aluminum powder, nickel powder, zinc oxide, potassium titanate, and titanium oxide, or mixtures of two or more conductive materials thereof.

A binder resin commonly used in electrodes of an electrochemical device may be used as the binder resin. Non-limiting examples of such a binder resin may include polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinyl acetate, ethylene vinyl acetate copolymer (polyethylene-co-vinyl acetate), polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxyl methyl cellulose, but is not limited thereto.

The electrolyte solution is a salt with the same structure as A⁺B⁻, and the salt in which A⁺ contains an ion consisting of an alkali metal cation such as Li⁺, Na⁺, K⁺, or a combination thereof, and B⁻ contains an ion consisting of an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻, or a combination thereof may be dissolved or dissociated in an organic solvent consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma butyrolactone (γ-butyrolactone), or mixtures thereof, but is not limited thereto.

The electrochemical device including the electrode assembly may be a lithium secondary battery. The battery may be used as a unit cell, and may be used as a battery module including the unit cell, a battery pack including the battery module, and a device including the battery pack as a power source. The device may include small-sized devices such as computers, mobile phones, and power tools, and medium to large-sized devices such as electric cars including electric vehicles (EVs), hybrid electric vehicles (HEVs), and plug-in hybrid electric vehicles (PHEVs) powered by electric motors and moved; electric two-wheeled vehicles including electric bicycles (E-bikes) and electric scooters (E-scooters); electric golf carts; and power storage systems, but is not limited thereto.

Hereinafter, the present disclosure will be described in more detail through specific Examples and Experimental Example. The following Examples and Experimental Example are intended to illustrate the present disclosure, and the present disclosure is not limited by the following Examples and Experimental Example.

### Example 1

### Preparation of coating slurry

A coating slurry in which the polymer binder, the inorganic particles, and the organic filler were dispersed was prepared by mixing an acrylic polymer binder (a copolymer in which polyacrylic acid and polyacrylamide were copolymerized at 50:50, Mw: 300,000) and an organic filler (polyethylene particles) at a weight ratio of 2:1 in 100 mL of distilled water at room temperature (25°C), adding 20 g of inorganic particles (Al₂O₃, aspect ratio: 1.5:1, particle diameter: 500 nm), and performing stirring with a shaker for 60 minutes.

### Preparation of porous substrate

A polyethylene film (MI: 0.2 g/10min, Tₘ: 135°C, porosity: 45%, average pore size: 45 nm) having a size of 20 cm × 30 cm and a thickness of 9 µm was used as a porous substrate.

### Manufacture of separator

The coating slurry was coated on both surfaces of the polyethylene film using a bar coater to form a porous coating layer of which each coating has a thickness of 2 µm.

A separator in which the inorganic particles contained in the porous coating layer had a packing density of 2.0 g/cm³ and a total thickness of 13 µm was manufactured by repeating five times a process of applying low-temperature air volume to the polyethylene film on which the porous coating layer was formed, and drying it while controlling the surface temperature of the porous coating layer not to exceed 60°C to remove a dispersion medium.

### Example 2

A separator was manufactured in the same manner as in Example 1 above except that the packing density of the inorganic particles was allowed to become 2.5 g/cm³ by adjusting the solid content when preparing the coating slurry.

### Example 3

A separator was manufactured in the same manner as in Example 1 above except that the polymer binder and the organic filler were mixed at a weight ratio of 1:2 when preparing the coating slurry.

### Example 4

A separator was manufactured in the same manner as in Example 1 above except that the polymer binder and the organic filler were mixed at a weight ratio of 5:1 when preparing the coating slurry.

### Comparative Example 1

A separator was manufactured in the same manner as in Example 1 above except that the organic filler was not used when preparing the coating slurry.

### Comparative Example 2

A separator was manufactured in the same manner as in Example 1 above except that the polymer binder and the organic filler were mixed at a weight ratio of 6:1 when preparing the coating slurry.

### Comparative Example 3

A separator was manufactured in the same manner as in Example 1 above except that the polymer binder and the organic filler were mixed at a weight ratio of 1:6 when preparing the coating slurry.

### Comparative Example 4

A separator was manufactured in the same manner as in Example 1 above except that the packing density of the inorganic particles was allowed to become 1.5 g/cm³ by adjusting the solid content when preparing the coating slurry.

### Comparative Example 5

A separator was manufactured in the same manner as in Example 1 above except that the packing density of the inorganic particles was allowed to become 3.0 g/cm³ by adjusting the solid content when preparing the coating slurry.

### Experiment Example. Check physical properties of separator

### Air permeability measurement

Air permeability was measured using a Gurley densometer (Gurley, 4110N) to measure the time it takes for 100 cc of air to permeate a separator with a diameter of 28.6 mm and an area of 645 mm².

### Check dimensional stability

The separators of Examples and Comparative Examples were prepared with a size of 5 cm × 5 cm, and each was inserted into an aluminum pouch with a size of 7 cm × 10 cm. 1 g of an electrolyte solution was injected into the pouch, and the pouch was sealed. A solvent having ethylene carbonate (EC)/ethyl methyl carbonate (EMC) mixed at a weight ratio of 3/7 and containing 3 mol of vinylene carbonate (VC), 1.5 mol of propane sultone (PS), 1 mol of ethylene sulfate (ESa), and 1 mol of lithium salt LiPF₆ as additives was used as the electrolyte solution.

After exposing the sealed pouch to an oven at 135°C for 30 minutes, the pouch was disassembled and the shrinkage rate in the TD direction was measured and shown in Tables 1 and 2 below.

**[Table 1]**

| | Example 1 | Example 2 | Example 3 | Example 4 |
|---|---|---|---|---|
| Weight ratio of polymer binder to organic filler | 2:1 | 2:1 | 1:2 | 5:1 |
| Packing density of inorganic particle (g/cm³) | 2.0 | 2.5 | 2.0 | 2.0 |
| Air permeability (s/100cc) | 75 | 85 | 70 | 85 |
| Heat shrinkage rate at 135°C in wet state (%) | 5 | 3 | 7 | 2 |

**[Table 2]**

| | Comparative Example 1 | Comparative Example 2 | Comparative Example 3 | Comparative Example 4 | Comparative Example 5 |
|---|---|---|---|---|---|
| Weight ratio of polymer binder to organic filler | - | 6:1 | 1:6 | 2:1 | 2:1 |
| Packing density of inorganic particle (g/cm³) | 2.0 | 2.0 | 2.0 | 1.5 | 3.0 |
| Air permeability (s/100cc) | 90 | 105 | 75 | 70 | 115 |
| Heat shrinkage rate at 135°C in wet state (%) | 12 | 7 | 15 | 8 | 9 |

## Claims

1. A separator for an electrochemical device, comprising a porous polymer substrate and a porous coating layer formed on at least one surface of the porous polymer substrate,
wherein the porous coating layer contains a polymer binder, inorganic particles, and an organic filler,
the polymer binder is contained in an amount of 1 to 10 parts by weight based on the total weight of the porous coating layer, and
the inorganic particles have a packing density of 2 g/cm³ to 2.5 g/cm³.

2. The separator for an electrochemical device of claim 1, wherein the organic filler is one or more selected from the group consisting of polyethylene, polyacetal, polysulfone (PSF), polyethersulfone (PES), polyetherimide (PEI), polyphenylene sulfide (PPS), polyether ether ketone (PEEK), polycarbonate, polyamideimide (PAI), polyimide (PI), polyamide, polyphenylene oxide, polybutylene terephthalate, and polyethylene terephthalate.

3. The separator for an electrochemical device of claim 1, wherein the polymer binder and the organic filler are contained at a weight ratio of 5:1 to 1:5.

4. The separator for an electrochemical device of claim 1, wherein the polymer binder is one or more selected from the group consisting of polyacrylic acid, polyacrylamide, methyl acrylate, ethyl acrylate, isopropyl acrylate, n-butyl acrylate, isobutyl acrylate, ethyl hexyl acrylate, methyl methacrylate, styrene-butadiene rubber, nitrile-butadiene rubber, acrylonitrile-butadiene rubber, acrylonitrile-butadiene-styrene rubber, and copolymers including one or more thereof.

5. The separator for an electrochemical device of claim 4, wherein the polymer binder has a weight average molecular weight of 100,000 to 500,000.

6. The separator for an electrochemical device of claim 1, wherein the inorganic particles have a packing density of 2.1 g/cm³ or more to 2.3 g/cm³ or less.

7. A separator for an electrochemical device as an electrochemical device comprising a cathode, an anode, and a separator disposed between the cathode and the anode, wherein the separator is the separator for an electrochemical device according to any one of claims 1 to 7.

8. The separator for an electrochemical device of claim 8, wherein the electrochemical device further comprises an electrolyte solution containing EC/EMC at a weight ratio of 3/7.
